# FASCICULE DE BREVET EUROPEEN

(11) **EP 0 851 111 B1**
(45) Date de publication et mention de la délivrance du brevet: **07.08.2002**
(21) Numéro de dépôt: 97403072.8
(22) Date de dépôt: 18.12.1997
(51) Int. Cl.: F02K 1/70

(54) **Inverseur de poussée de turboréacteur à double flux à coquille aval**
Schubumkehrvorrichtung für ein Strahltriebwerk mit Klappe am Hinterteil
Turbofan thrust reverser with aft end flaps

(30) Priorité: 26.12.1996 FR 9616030
(43) Date de publication de la demande: 01.07.1998
(73) Titulaire: HUREL-HISPANO LE HAVRE, 76700 Harfleur (FR)
(72) Inventeur: Gonidec, Patrick, 76290 Montivilliers (FR); Vauchel, Guy Bernard, 76610 Le Havre (FR)
(74) Mandataire: Berrou, Paul

(56) Documents cités:
- EP-A- 0 414 609
- WO-A-92/10660
- FR-A- 2 648 869
- GB-A- 2 045 179
- US-A- 4 216 926
- US-A- 4 545 199
- US-A- 4 698 964

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

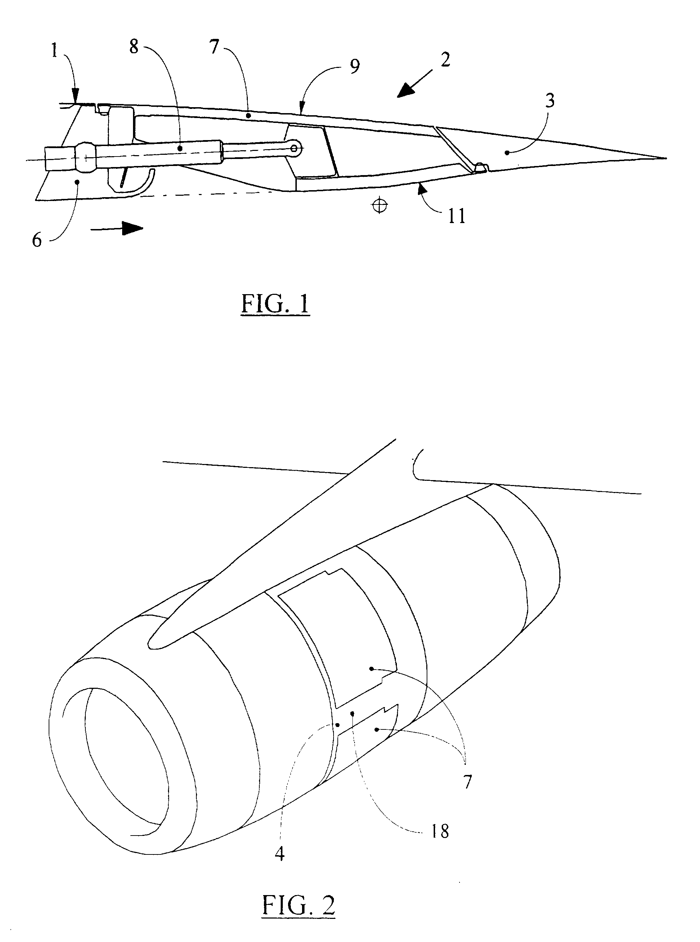

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.
Des exemples de réalisation de ce type d'inverseur de poussée de turboréacteur à portes basculantes sont décrits notamment par FR-A-2 618 853, FR-A 2.618.852, FR-A- 2 621 082, FR-A 2 627 807, FR-A 2 634 251, FR-A 2 638 207 et FR-A 2 651 021 dont est titulaire la demanderesse.

Dans certaines applications, l'installation d'un inverseur de poussée de ce type connu soulève de grandes difficultés et peut conduire pratiquement à une impossibilité. C'est notamment le cas pour des turboréacteurs à très grand taux de dilution, associés lors du montage sur l'avion à une nacelle très courte et à un canal de flux secondaire court correspondant à un fonctionnement dit à flux séparés, pour lesquels l'utilisation de portes proprement dites comme obstacles d'inversion est mal adaptée.
On connaît par FR-A- 2.722.534 un inverseur de poussée adapté à ces applications particulières et dans lequel au moins une partie amont de chaque obstacle ou coquille de l'inverseur, lors du fonctionnement en jet direct, recouvre une partie interne d'une structure fixe constituant la paroi extérieure du canal du flux secondaire de manière que la surface extérieure de ladite coquille constitue une partie de la surface extérieure de la nacelle dans le prolongement de la surface extérieure de ladite structure fixe, chaque coquille étant associée à au moins une bielle amont et à au moins une bielle aval, lesdites bielles assurant la fixation et le maintien de la coquille ainsi que son guidage lors des déplacements de coquille. Pour certaines applications, chaque coquille comporte une partie aval dont la surface intérieure est dans le prolongement de la surface extérieure du canal en jet direct.
Cette solution connue comporte toutefois certains inconvénients. En effet, la bielle en aval de la coquille se situe dans une zone d'accélération du flux dans le canal annulaire et notamment dans la zone du pivot de bielle sur le capot primaire, la vitesse du flux avoisine ou dépasse la vitesse du son en vol de croisière, ce qui entraîne de fortes pertes aérodynamiques. En outre, d'autres pertes aérodynamiques sont occasionnées par une entaille ou empreinte ménagée dans la structure aval de la coquille ou de la structure fixe pour permettre le débattement de la bielle aval. Enfin, du fait que le bord aval de la coquille forme l'extrémité aval de la nacelle et se termine en structure fine, des butées doivent être disposées sur la structure afin de retenir la coquille en jet inversé par contact sur le capot primaire. Par suite, ces butées débordent les lignes de la nacelle et créent des pertes aérodynamiques.
Un inverseur de poussée de turboréacteur permettant de répondre à ces conditions sans encourir les inconvénients des solutions précédemment connues est caractérisé en ce que les coquilles sont entraînées par au moins une bielle amont et au moins une bielle aval, lesdites bielles étant reliées de manière articulée aux parois latérales des coquilles, étant en outre installées sur la structure fixe de la nacelle et disposées en jet direct dans l'épaisseur de la poutre fixe séparant deux coquilles de manière que le débattement des bielles ne crée pas d'entaille apparente dans la structure fixe en jet direct.
D'autres caractéristiques et avantages de l'invention seront mieux compris à la lecture de la description qui va suivre d'un mode de réalisation de l'invention en référence aux dessins annexés sur lesquels :
- la figure 1 représente une demi-vue schématique, en coupe longitudinale par un plan passant par l'axe de rotation d'un turboréacteur, d'un inverseur de poussée à portes pivotantes, en position fermé, d'un type connu et qui a fait précédemment l'objet d'une description ;
- la figure 2 représente une vue schématique en perspective d'un inverseur de poussée du type précité montré en position monté et avec les portes fermées ;
- la figure 3 représente, dans une vue analogue à celle de la figure 1, un inverseur de poussée selon un mode de réalisation de l'invention en position jet direct ;
- la figure 4 représente le mode de réalisation décrite dans la figure 3 en position jet inversé ;
- la figure 5 représente le mode de réalisation de l'invention en mode jet inversé décrit dans la figure 4 en perspective vue de l'avant ;
- les figures 6 et 7 représentent un mode d'entraînement par vérin sur un pivot de bielle en position jet direct et jet inversé ;
- les figures 8 et 9 représentent un mode d'entraînement de la coquille par vérin central en position jet direct et jet inversé ;
- les figures 10 et 11 représentent un mode de l'invention par manoeuvre de bielle amont centrale en position jet direct et jet inversé ;
- la figure 12 représente en vue de l'arrière, la perspective d'un mode de l'invention montrant les découpes aval de la coquille possibles à réaliser ;
- les figures 13 et 14 représentent dans un mode de réalisation de l'invention, la coquille recouvrant entièrement la structure interne de la nacelle en position jet direct et jet inversé ;
- les figures 15 et 16 représentent dans un mode défini suivant les figures 13 et 14, un ajout d'ouverture dans la structure fixe de la nacelle en position jet direct et jet inversé.

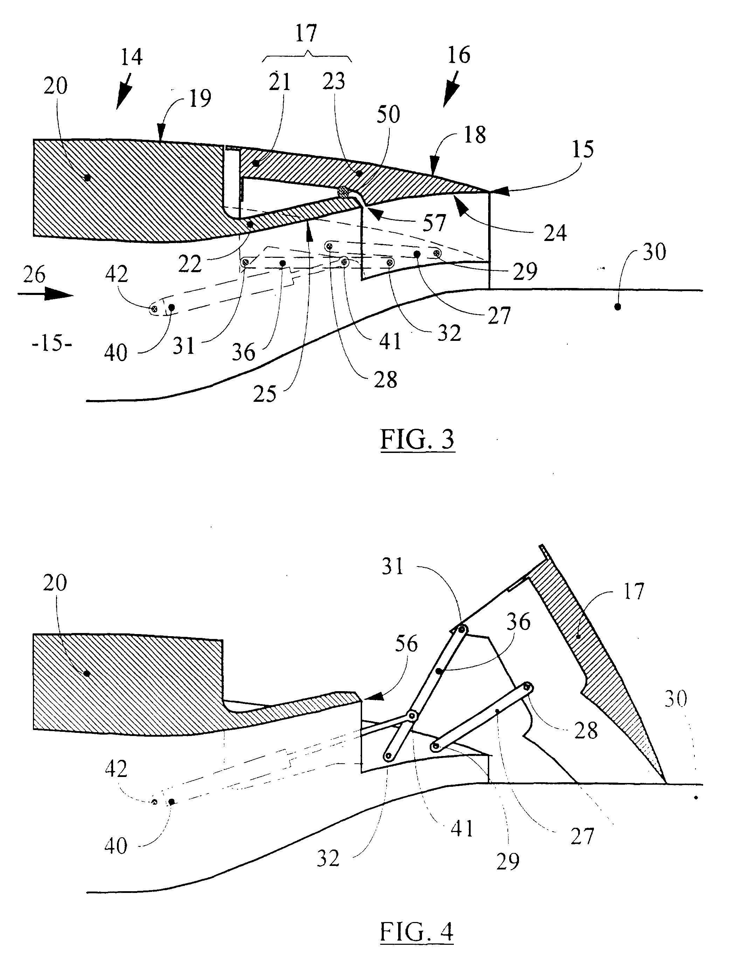

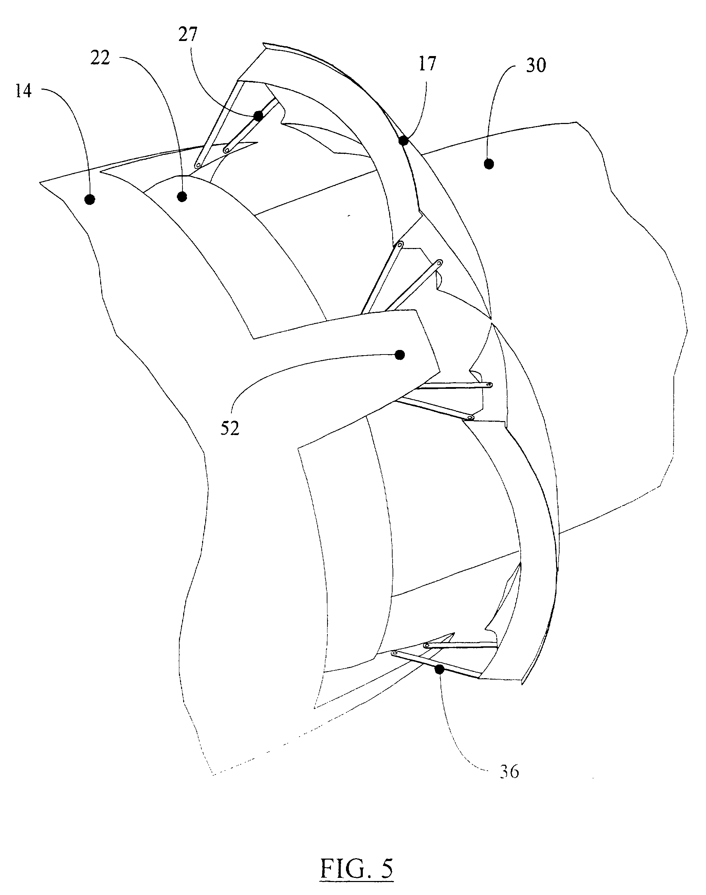

Selon un mode de réalisation représenté sur la figure 3, la nacelle 14 comporte un inverseur de poussée 16 dont la partie mobile est constituée dans l'exemple représenté par quatre éléments déplaçables (ce peut être un, deux, trois, quatre voire plus de quatre) ou coquilles 17. La surface extérieure 18 de chaque coquille 17 constitue une partie de la surface extérieure 19 de la nacelle 14 et se trouve dans son prolongement. Une partie amont 21 de la coquille 17 recouvre extérieurement une partie aval 22 de ladite structure fixe 20 de la nacelle. Le détourage aval 15 de la coquille 17 forme une partie de la section d'éjection de la tuyère du canal secondaire. Une partie aval 23 de la coquille 17 est disposée dans le prolongement vers l'aval de la structure fixe 20 de la nacelle. Amont et aval sont définis par rapport au sens normal de circulation des gaz dans le turboréacteur, en fonctionnement de jet direct. La surface intérieure 24 de ladite partie aval 23 de la coquille 17 se raccorde à la surface intérieure 25 de ladite partie aval 22 de la structure fixe 20 de la nacelle, délimitant ainsi extérieurement le canal secondaire 15 de circulation du flux froid secondaire, symbolisé par la flèche 26.
La figure 3 représente un mode de réalisation de l'invention constitué par des bielles amont 36 et aval 27 reliées vers l'aval des parois latérales de la structure fixe 20 (ou des poutres 52) par une articulation respectivement 32 et 29 et fixées d'une manière articulée aux points 31 et 28 sur les parois latérales des coquilles 17.
En position jet direct les bielles amont 36 et aval 27 sont comprises dans l'épaisseur de la poutre 52 entre la paroi de la veine externe du canal annulaire 15 et la surface extérieure 19 de la structure fixe 20 de la nacelle. La figure 5 montre en perspective ce mode de l'invention en position jet inversé.

Un vérin latéral 40 est fixé sur la structure fixe 20 en un point pivot 42 situé en extrémité ou en un point quelconque sur la longueur du corps du vérin. Le vérin peut être simple, télescopique, hydraulique, électrique ou pneumatique.
Le point 41 d'accrochage dudit vérin sur la bielle amont 36 est positionné en un point quelconque défini par l'homme de l'art suivant la nécessité entre les deux pivots 31 et 32 de la bielle amont 36. Un ou deux vérins peuvent être utilisés par ensemble de coquille 17. Il est à noter que l'entraînement peut aussi se faire par la bielle aval 27 dans les mêmes conditions qu'expliquées précédemment.
Le vérin 40 peut être aussi placé dans la poutre 52. Un seul vérin peut entraîner deux coquilles.
La figure 4 représente le vérin 40 entraînant la bielle amont 36. Elle pivote autour de son point d'articulation 32. Ladite bielle amont 36 emmène en basculement vers l'aval la coquille 17. La manoeuvre et l'angle de la coquille 17 sont assurés, dans chaque phase de manoeuvre et en position jet inversé, par la bielle aval 27. Le basculement de la coquille 17 est réalisé par le différentiel angulaire existant entre les deux bielles, entre la phase de jet direct et celle de jet inversé.

La distance d'ouverture vers l'aval de la nacelle, l'angle et la position de la coquille 17 sont définis pour répondre à l'effet aérodynamique recherché. Ils sont fonction des points pivots fixes 32 et 29 retenus sur la poutre 52, de la longueur des bielles amont 36 et aval 27 et des positions d'accrochage desdites bielles sur la coquille 17 aux points 31 et 28.
Le bord de déviation 56 peut être de forme et de détourage adapté aux exigences aérodynamiques en mode jet direct et surtout jet inversé. La partie 57 interne de la coquille 17 étant ajustée avec la forme définie dudit bord de déviation 56.

Un joint 50 peut être placé en aval de la partie aval 22 de la structure fixe 20 pour minimiser l'impact de l'effort appliqué sur l'interne de la coquille 17 par le flux circulant dans le canal annulaire 15.

Le verrouillage en position jet direct des coquilles 17 peut s'effectuer soit sur les bielles amont 36 et/ou aval 27, soit sur une partie de la paroi interne de la coquille 17 en recouvrement de la partie aval 22 de la structure fixe 20 de la nacelle, soit sur la partie amont de la coquille 17 d'un mode connu en soi.

En phase finale d'inversion du jet, la coquille 17 peut reposer sur sa partie aval 15 en butée sur la structure 30, ou bien le vérin peut limiter la course de ladite coquille 17.

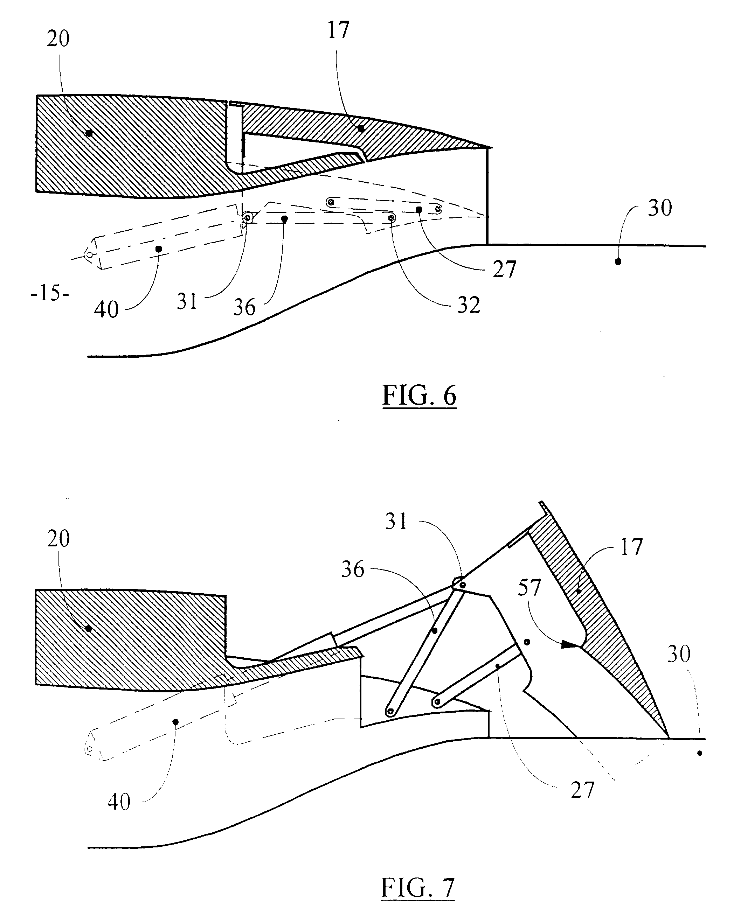

Les figures 6 et 7 montrent un entraînement par vérin 40 télescopique mais le vérin selon la place laissée à l'amont de la nacelle peut être simple. Celui-ci peut être relié à la bielle amont 36 au point d'accrochage 31 de celle-ci avec la coquille 17 mais aussi bien en un point intermédiaire entre les points pivots 31 et 32 de ladite bielle amont. De même ledit vérin 40 peut entraîner la coquille 17 par l'intermédiaire de la bielle 27 dans les mêmes conditions que celles de la bielle amont 36.

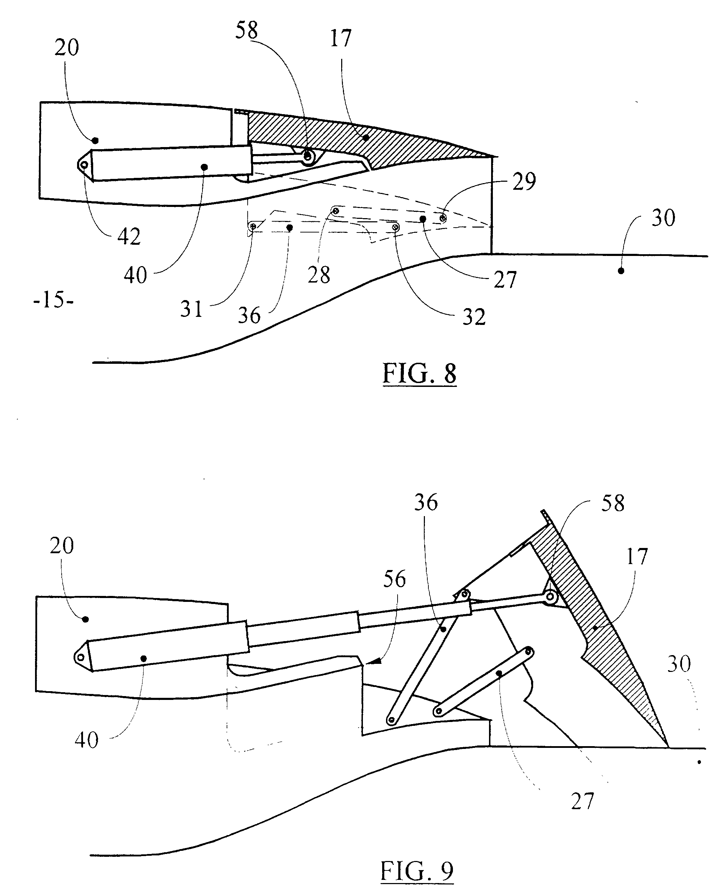

Les figures 8 et 9 montrent un entraînement de coquille 17 par vérin 40 télescopique, le vérin selon la place laissée à l'amont de la nacelle pouvant être simple, dans l'axe central de la coquille 17. L'accrochage 58 de la tige de vérin sur l'interne de la coquille 17 se situe dans une zone entre l'amont et le milieu de l'interne de la coquille 17.

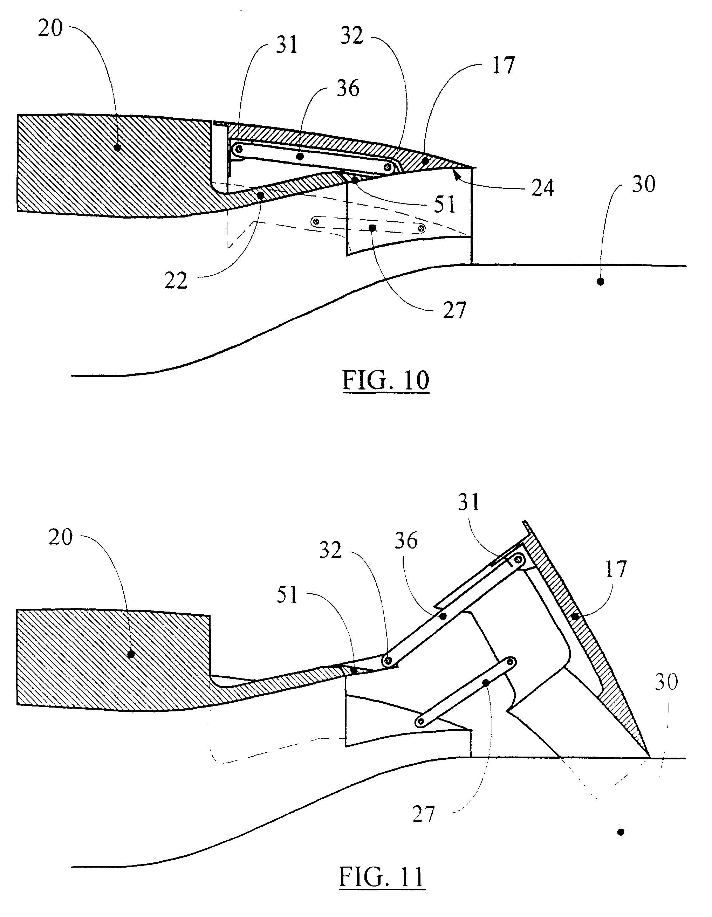

Les figures 10 et 11 montrent une cinématique réalisée par un entraînement de la bielle amont 36 placée dans la partie centrale de la coquille 17. La bielle amont 36 est accrochée en un point pivot 32 sur la partie aval 22 de la structure fixe 20 ou, comme représenté sur les figures, sur une excroissance 51 de la partie aval 22 de la structure fixe 20 de la nacelle.
Ce peut être une seule bielle 36 ou plusieurs, situées dans l'axe de la coquille 17 ou décalées de l'axe, entre le milieu longitudinal de la coquille 17 et ses extrémités latérales.
Le point d'accrochage 31 de la bielle amont 36 sur la coquille se situe dans une zone au voisinage de l'amont de la coquille. L'entraînement par vérin s'effectue dans les mêmes conditions que celles déja expliquées dans les figures 3 à 9. Selon l'emplacement retenu pour le point d'accrochage 32 de la bielle 36, dans une direction le plus en aval possible par rapport à la surface aval interne 24 de la coquille 17, celle-ci peut être rendue auto fermante.
La coquille 17 étant maintenue en partie amont, par exemple par un ou des verrous la rendant en partie pivotante à cette extrémité, un système d'entraînement, qui peut être par came
ou tout autre connu de l'homme de métier, peut rendre le(s) point(s) 32 de la bielle 36 ou le(s) point(s) 29 de la bielle 27 mobile(s), permettant ainsi de faire ressortir la partie aval de la coquille. Ce système permet d'avoir une tuyère variable associée aux coquilles de l'inverseur.

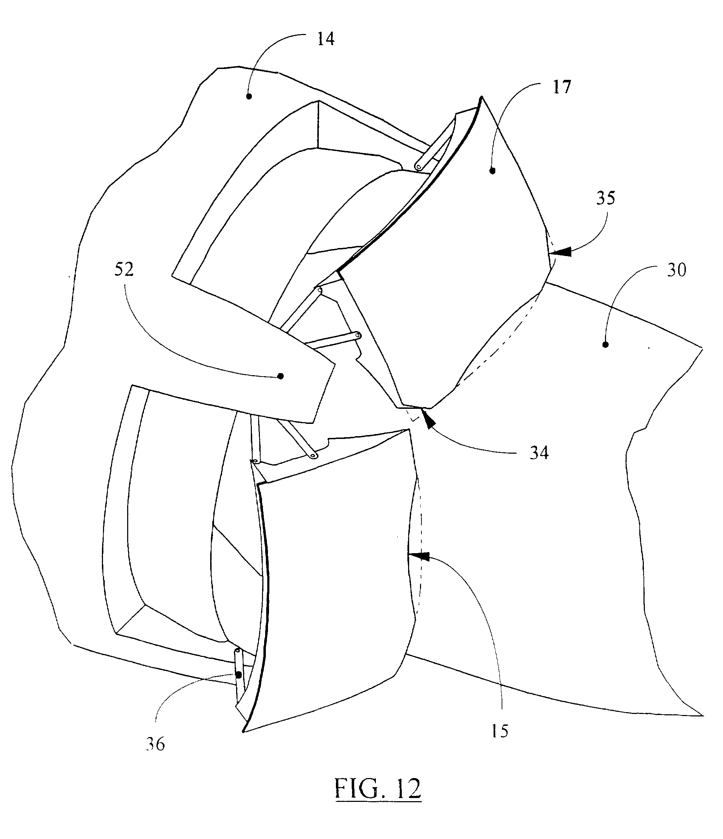

La figure 12 montre les coquilles 17 en position jet inversé dans un mode de réalisation de l'invention. Le détourage aval 15 des coquilles 17 peut recevoir une forme épousant la structure externe du compartiment moteur 30, ceci afin d'optimiser les fuites en mode jet inversé entre lesdites coquilles et la structure entourant le compartiment moteur. De même que les coquilles 17 peuvent comporter des coins coupés tels que 34 et 35 afin de permettre de mieux régler les fuites de coquilles et d'adapter le débit du flux inversé, notamment le rapport de la contre poussée à la poussée résiduelle.

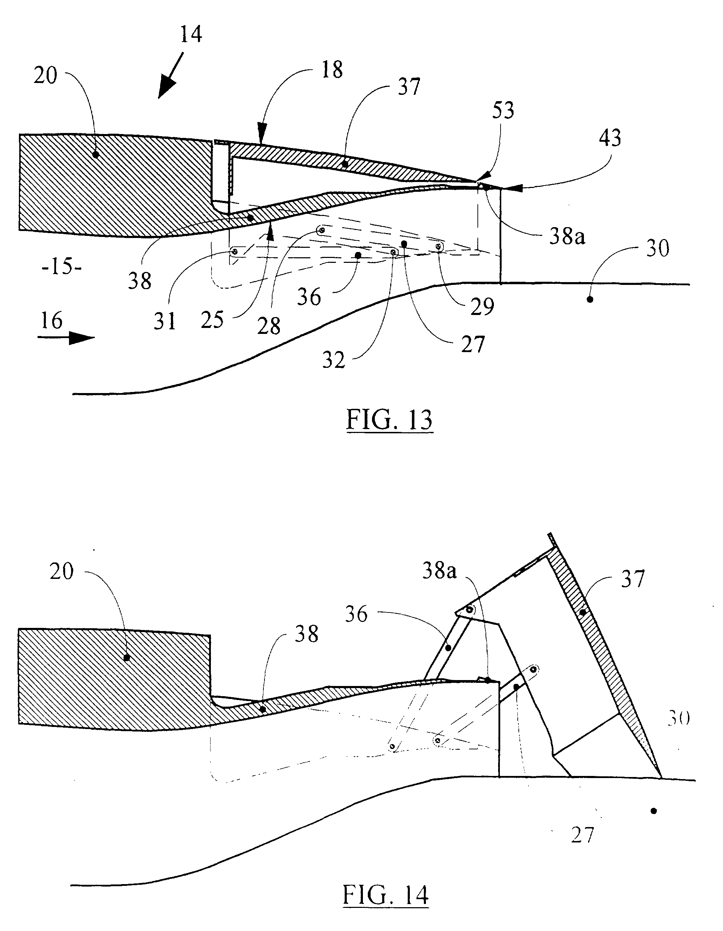

Les figures 13 et 14 montrent un autre mode de réalisation de l'invention où la coquille 37 vient recouvrir en totalité l'extérieur de l'aval 38 de la structure fixe 20 de la nacelle 14. La surface intérieure 25 de l'aval 38 est terminée du côté aval par une partie fixe en prolongement 38a. La partie 38a délimite d'une part, du côté externe, la surface extérieure de nacelle, dans le prolongement en jet direct, de la surface extérieure 18 de la coquille 37, et d'autre part, du côté interne, la surface extérieure de la partie aval du canal 15 du flux secondaire 16. L'extrémité 43 de la partie 38a constitue ainsi en jet direct un bord de fuite et lors du fonctionnement en inversion de poussée, tel que représenté sur la figure 14, un bord de déviation délimitant un bord du puits d'inversion créé par la coquille 37. Le système de commande des déplacements et de verrouillage des coquilles 37 peuvent être conservés identiques à ceux qui ont été décrits dans les modes de réalisation représentés sur les figures 3 à 11.
Le détourage aval 53 des coquilles 37 peuvent recevoir une forme adaptée suivant l'effet recherché en mode jet inversé pour obtenir le jeu voulu entre la structure extérieure du compartiment moteur 30 et les coquilles 37, ceci sans affecter l'extrémité 43 du bord de fuite de la nacelle.

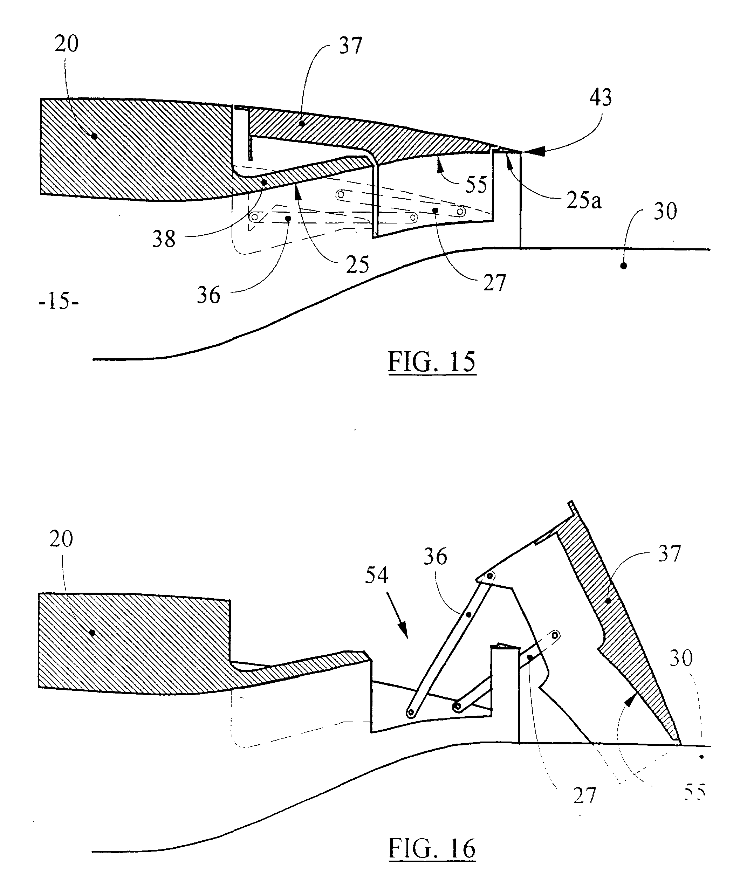

Les figures 15 et 16 montrent une variante au mode de réalisation de l'invention représenté sur les figures 13 et 14. Pour des raisons d'augmentation du passage du flux ou de pilotage de nappes en mode jet inversé, une (voire plusieurs) ouverture 54 peut être pratiquée dans la partie aval 38 de la structure fixe 20 de la nacelle. Cette (ou ces) ouverture 54 est bouchée en mode jet direct par une partie 55 de l'interne de la coquille 37. La surface de ladite partie 55 de la coquille se raccorde à la surface intérieure 25 et 25a de la partie aval 38 de la structure fixe 20 de la nacelle.
Ces ouvertures 54 sont en nombre, en longueur, en largeur et en détourage appropriés pour permettre les performances désirées en mode d'inversion de jet.

## Revendications

1. Inverseur de poussée de turboréacteur à double flux comportant des éléments déplaçables ou coquilles (17 ; 37) susceptibles, en position fermée de s'intégrer dans la paroi extérieure du canal annulaire du flux secondaire, et en position déployée de constituer des obstacles de déviation du flux secondaire procurant une inversion de poussée, lesdites coquilles (17 ; 37) étant associées à des moyens de déplacement tels que des vérins, au moins une partie amont (21) de chaque coquille (17) de l'inverseur (16), lors du fonctionnement en jet direct, recouvrant une partie interne (22) d'une structure fixe (20) constituant la paroi extérieure du canal (15) du flux secondaire de manière que la surface extérieure (18) de ladite coquille (17) constitue une partie de surface extérieure de nacelle (14), dans le prolongement de la surface extérieure (19) de ladite structure fixe (20) **caractérisé en ce que** les coquilles (17 ; 37) sont entraînées par au moins une bielle amont (36) et au moins une bielle aval (27), lesdites bielles (26, 37) étant reliées de manière articulée aux parois latérales des coquilles, étant en outre installées sur la structure fixe de la nacelle et disposées en jet direct dans l'épaisseur de la poutre fixe séparant deux coquilles (17 ; 37) de manière que le débattement des bielles ne crée pas d'entaille apparente dans la structure fixe en jet direct.

2. Inverseur de poussée de turboréacteur à double flux selon la revendication 1 dans lequel lesdites bielles (27, 36) sont déplacées au moyen d'au moins un vérin lié à l'une des bielles et disposée dans l'épaisseur de la structure de nacelle en jet direct.

3. Inverseur de poussée de turboréacteur à double flux selon la revendication 2 dans lequel le point de liaison entre le vérin et la bielle est situé en un point intermédiaire entre les points d'articulation de la bielle.

4. Inverseur de poussée de turboréacteur à double flux selon la revendication 2 dans lequel le point de liaison entre le vérin et la bielle est situé au point d'articulation de la bielle sur la coquille.

5. Inverseur de poussée de turboréacteur à double flux selon la revendication 1 dans lequel le vérin de déplacement de coquille est placé dans l'axe longitudinal de la coquille et directement lié à la coquille.

6. Inverseur de poussée de turboréacteur à double flux selon la revendication 1 dans lequel une bielle amont (36) placée dans la partie centrale de la coquille (17) est articulée sur un pivot (32) placé sur la partie aval (22) de la structure fixe (20).

7. Inverseur de poussée de turboréacteur à double flux selon l'une quelconque des revendications 1 à 6 dans lequel ladite partie interne (38) de structure fixe recouverte en jet direct par la totalité de ladite coquille (37) est prolongée par une partie aval (38a) fixe délimitant, d'une part, du côté externe, la surface extérieure de nacelle, dans le prolongement, en jet direct de la surface extérieure de la coquille et, d'autre part, du côté interne, la surface extérieure de la partie aval du canal (15) de flux secondaire, dans toutes les configurations de fonctionnement, de manière à constituer un bord de fuite (43) lors du fonctionnement en jet direct et un bord de déviation (43) délimitant un puits d'inversion lors du fonctionnement en inversion de poussée.

8. Inverseur de poussée de turboréacteur à double flux selon la revendication 7 dans lequel ladite partie aval (38) de structure fixe comporte au moins une ouverture (54) qui est bouchée en jet direct par une partie interne (55) de la coquille (37).

## Claims

1. A bypass turbojet engine thrust reverser comprising displaceable elements or shells (17; 37) adapted, when in the closed position, to be integrated into the outer wall of the annular secondary flow duct, and, when in the deployed position, to form obstacles deflecting the secondary flow to produce a thrust reversal, said shells (17; 37) being associated with displacement means such as rams, at least an upstream (part 21) of each shell(17)of the reverser (16) overlapping, in forward thrust operation, an internal part (22) of a fixed structure (20) forming the outer wall of the secondary flow duct (15) so that an external surface (18)of said shell (17)forms a part of the external nacelle surface which lies flush with the external surface (19)of said fixed structure (20), **characterised in that** the shells (17; 37) are driven by at least one upstream rod (36) and at least one downstream rod (27), said rods (36, 27) being articulated to the side walls of the shells, being installed on the fixed structure of the nacelle, and being disposed, in forward thrust operation, in the thickness of a fixed beam separating two shells (17; 37) so that the movement of the rods does not disclose any visible recess in the fixed structure in forward thrust operation.

2. A bypass turbojet engine thrust reverser according to claim 1 wherein said rods (27, 36) are driven by at least one ram which is connected to one of the rods and is disposed in the thickness of the nacelle structure in forward thrust operation.

3. A bypass turbojet engine thrust reverser according to claim 2 wherein the point of connection between the ram and the rod is disposed at an intermediate point between the articulation points of the rod.

4. A bypass turbojet engine thrust reverser according to claim 2 wherein the point of connection between the ram and the rod is disposed at the point of articulation of the rod to the shell.

5. A bypass turbojet engine thrust reverser according to claim 1 wherein 5he shell-driving ram is disposed on the longitudinal axis of the shell and is directly connected thereto.

6. A bypass turbojet engine thrust reverser according to claim 1 wherein an upstream rod(36) disposed in the central part of the shell (17) is articulated on a pivot (32) disposed on the downstream part (22) of the fixed structure (20).

7. A bypass turbojet engine thrust reverser according to any of claims 1 to 6 wherein the internal part (38) of the fixed structure, overlapped in forward thrust operation by the whole of said shell (37), is prolonged by a fixed downstream part (38a) bounding, on the one hand, on the external side, the external nacelle surface which lies flush with the external surface of the shell in forward thrust operation and, on the other hand, on the internal side, the external surface of the downstream part of the secondary flow duct (15) in all operational configurations, so as to form a trailing edge in forward thrust operation and a deflecting edge (43)in reverse thrust operation which bounds a reversal sink.

8. A bypass turbojet engine thrust reverser according to claim 7 wherein said downstream part (38a) of the fixed structure is formed with at least one aperture (54) which is closed, in forward thrust operation, by an internal part (55) of the shell (37).

## Patentansprüche

1. Schubumkehrvorrichtung für ein Zweikreis-Turbostrahltriebwerk mit verstellbaren Elementen oder Schalen (17, 37), die sich in geschlossener Stellung in die Außenwand des ringförmigen Kanals des Sekundärstroms einfügen und in ausgefahrener Stellung Hindernisse zur Ablenkung des Sekundärstroms bilden können, die eine Schubumkehr bewirken, wobei die genannten Schalen (17; 37) mit Verstellungsmitteln, wie Antriebszylindern, verbunden sind und wobei wenigstens ein stromaufwärtiger Teil (21) jeder Schale (17) der Schubumkehrvorrichtung im Direktstrahlbetrieb einen inneren Teil (22) einer die Außenwand des Kanals (15) des Sekundärstroms bildenden festen Struktur überdeckt, so daß die Außenfläche (18) der Schale (17) in Verlängerung der Außenfläche (19) der genannten festen Struktur (20) einen Teil der Außenfläche der Gondel (14) bildet,
**dadurch gekennzeichnet,**
**daß** die Schalen (17; 37) von wenigstens einem stromaufwärtigen Pleuel (36) und wenigstens einem stromabwärtigen Pleuel (27) in Bewegung geracht werden, wobei die Pleuel (36, 27) gelenkig mit den Seitenwänden der Schalen verbunden und außerdem an der festen Struktur der Gondel befestigt sind und im Direktstrahlbetrieb in der Wandstärke des festen Trägers angeordnet sind, der zwei Schalen (17; 37) voneinander trennt, so daß die Auslenkung der Pleuel im Direktstrahlbetrieb keinen merkbaren Einschnitt in der festen Struktur hervorruft.

2. Schubumkehrvorrichtung für ein Zweikreis-Turbostrahltriebwerk nach Anspruch 1, bei der die Pleuel (27, 36) mit Hilfe wenigstens eines Antriebszylinders bewegt werden, der mit einem der Pleuel verbunden und im Direktstrahlbetrieb in der Wandstärke der Gondelstruktur angeordnet ist.

3. Schubumkehrvorrichtung für ein Zweikreis-Turbostrahltriebwerk nach Anspruch 2, bei der der Verbindungspunkt zwischen dem Antriebszylinder und dem Pleuel in einem Zwischenpunkt zwischen den Gelenkpunkten des Pleuels liegt.

4. Schubumkehrvorrichtung für ein Zweikreis-Turbostrahltriebwerk nach Anspruch 2, bei der der Verkindungspunkt zwischen dem Antriebszylinder und dem Pleuel in dem Gelenkpunkt des Pleuels an der Schale liegt.

5. Schubumkehrvorrichtung für ein Zweikreis-Turbostrahltriebwerk nach Anspruch 1, bei der der Antriebszylinder zum Bewegen der Schale in der Längsachse der Schale angeordnet und mit der Schale direkt verbunden ist.

6. Schubumkehrvorrichtung für ein Zweikreis-Turbostrahltriebwerk nach Anspruch 1, bei der ein stromaufwärtiger Pleuel (36), der in dem zentralen Teil der Schale (17) angeordnet ist, an einem Gelenkzapfen (32) gelenkig gelagert ist, der an dem stromaufwärtigen Teil (22) der festen Struktur (20) angeordnet ist.

7. Schubumkehrvorrichtung für ein Zweikreis-Turbostrahltriebwerk nach einem der Ansprüche 1 bis 6, bei der der genannte innere Teil (38) der festen Struktur, der im Direktstrahlbetrieb von der Schale (37) insgesamt überdeckt wird, von einem festen stromabwärtigen Teil (38a) verlängert wird, der einerseits im Direktstrahlbetrieb auf der Außenseite die Außenfläche der Gondel in der Verlängerung der Außenfläche der Schale begrenzt, andererseits auf der Innenseite in allen Betriebskonfigurationen die Außenfläche des stromabwärtigen Teils des Kanals (15) des Sekundärstroms begrenzt, so daß er im Direktstrahlbetrieb eine Austrittskante (43) und im Schubumkehrbetrieb eine Ablenkkante (43) bildet, die einen Schubumkehrschacht begrenzt.

8. Schubumkehrvorrichtung für ein Zweikreis-Turbostrahltriebwerk nach Anspruch 7, bei der der stromabwärtige Teil (38) der festen Struktur wenigstens eine Öffnung (54) aufweist, die im Direktstrahlbetrieb von einem inneren Teil (55) der Schale (37) verschlossen wird.
